# FASCICULE DE BREVET EUROPEEN

(11) **EP 0 724 927 B1**
(45) Date de publication et mention de la délivrance du brevet: **14.07.1999**
(21) Numéro de dépôt: 96400208.3
(22) Date de dépôt: 29.01.1996
(51) Int. Cl.: B23K 9/035

(54) **Procédé de soudage électrique de tôles métalliques sous courant de gaz**
Verfahren zum elektrischen Schweissen von Metallblechen unter Gasströmung
Process for electric welding of metallic plates under gas flow

(30) Priorité: 01.02.1995 FR 9501179
(43) Date de publication de la demande: 07.08.1996
(73) Titulaire: SCAPA TAPES FRANCE SA, 26001 Valence (FR)
(72) Inventeur: Carruel, André, F-26000 Valence (FR); Flament, Jean-Claude, F-07130 Soyons (FR)
(74) Mandataire: Rousset, Jean-Claude

(56) Documents cités:
- US-A- 3 365 566
- US-A- 4 182 951
- US-A- 4 759 981
- PATENT ABSTRACTS OF JAPAN vol. 14, no. 271 (M-983), 12 Juin 1990 & JP-A-02 080197 (KOBE STEEL LTD), 20 Mars 1990,

## Description

L'invention concerne un procédé de soudage électrique bord à bord, en présence d'un gaz, de deux tôles métalliques présentant chacune des première et seconde faces opposées, dans lequel on fait passer un courant électrique de soudage entre l'une au moins des tôles et une électrode placée en regard de la première face de celles-ci et qui se déplace progressivement le long des bords à souder, la zone de passage du courant électrique étant balayée par un courant de gaz.

Les procédés de ce genre sont utilisés pour le soudage de tôles relativement minces, notamment de tôles d'acier inoxydable d'une épaisseur de l'ordre de 2 mm. Le gaz utilisé peut être soit un gaz inerte protecteur tel que l'argon, par exemple dans les procédés dits TIG et MIG, soit un gaz actif participant au processus de soudage, par exemple dans le procédé dit MAG.

On a constaté que ces procédés conduisent à des soudures de meilleure qualité lorsqu'une pièce métallique en forme de goulotte ou de gouttière est placée en regard des secondes faces des tôles pour définir avec celles-ci un volume de confinement du gaz. Une telle pièce peut être mise en place au moyen d'un étau ou de pinces étaux, ou tenue par un aide du soudeur. Ces méthodes sont malcommodes, la seconde augmentant en outre sensiblement le cout de main d'oeuvre.

Le but de l'invention est de remédier à ces inconvénients, et de fournir un procédé permettant le confinement du gaz dans des conditions commodes et économiques.

US-A-3365566 décrit un procédé selon le préambule de la revendication 1. Un procédé analogue est décrit dans US-A-4182951.

L'invention vise notamment un procédé selon la revendication 1.

La mise en place de la bande métallique, au moyen de l'adhésif par contact, est particulièrement commode et permet à la bande de rester fixée aux tôles pendant toute la durée du déplacement relatif de l'électrode, sans nécessiter de main d'oeuvre supplémentaire.

Des caractéristiques optionnelles de l'invention, complémentaires ou alternatives, sont énoncées ci-après :
- La face de la bande métallique portant ledit adhésif est nue dans la région médiane comprise entre les deux régions marginales. Aucune substance n'est ainsi exposée à la chaleur de la soudure, qui pourrait se dégrader en dégageant des produits polluants pour l'atmosphère ou pour la soudure.
- Ledit adhésif est choisi parmi ceux du type acrylique réticulé et du type silicone. Les adhésifs de ces types résistent à des températures de l'ordre de 180°C.
- Ladite bande métallique est à base d'aluminium, ou d'un autre métal suffisamment malléable.
- Ladite bande métallique a une épaisseur comprise entre 0,03 et 0,15 mm. Les matériaux à base d'aluminium, notamment l'aluminium et les alliages d'aluminium, présentent dans cette gamme d'épaisseur à la fois une résistance mécanique et une flexibilité suffisantes pour cette application.
- Ladite bande métallique a une largeur comprise entre 30 et 200 mm.
- Chacune desdites régions marginales a une largeur comprise entre 5 et 50 mm.
- Les secondes faces des deux tôles sont sensiblement dans un même plan et on applique la bande de façon que la région médiane comprise entre les deux régions marginales de la bande s'écarte desdites secondes faces sous forme d'une gouttière définissant avec les tôles une chambre tubulaire sensiblement fermée sur tout son périmètre et balayée par le gaz. Ceci peut être nécessaire lorsque le courant est fort, par exemple de l'ordre de 75 ampères pour des tôles d'acier inoxydable de 2 mm d'épaisseur, et/ou qu'on utilise un métal d'apport.
- Les secondes faces des deux tôles sont tournées vers l'intérieur d'un dièdre saillant formé par les tôles, et on applique la bande de façon que la région médiane comprise entre les deux régions marginales de celle-ci s'écarte desdites secondes faces au moins au voisinage desdits bords. Ici encore, un volume de confinement est formé entre les tôles et la bande, et cette dernière est éloignée de la zone la plus chaude et ne risque donc pas de fondre.
- Lesdites tôles sont en acier inoxydable, ou en tout autre matériau métallique susceptible d'être soudé en présence de gaz.

Au moins ledit adhésif peut être recouvert d'une feuille protectrice à retirer avant l'utilisation du dispositif.

Les caractéristiques et avantages de l'invention seront exposés plus en détail dans la description ci-après, en se référant aux dessins annexés, où des éléments identiques ou analogues sont désignés dans toutes les figures par les mêmes numéros de référence. Sur ces dessins :
- la figure 1 illustre un dispositif utilisable dans l'invention,
- les figures 2 à 5 sont des vues schématiques illustrant des étapes successives d'un procédé qui ne fait pas partie de l'invention;
- les figures 6 et 7 illustrent des étapes successives d'un procédé selon l'invention; et
- la figure 8 est une vue en coupe montrant la bande appliquée sur les tôles dans une variante du procédé.

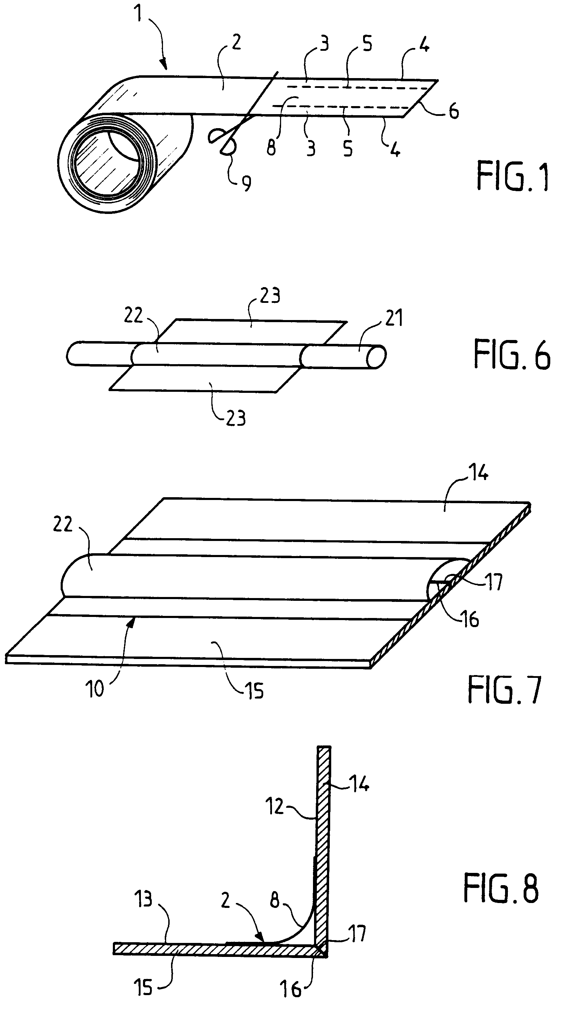

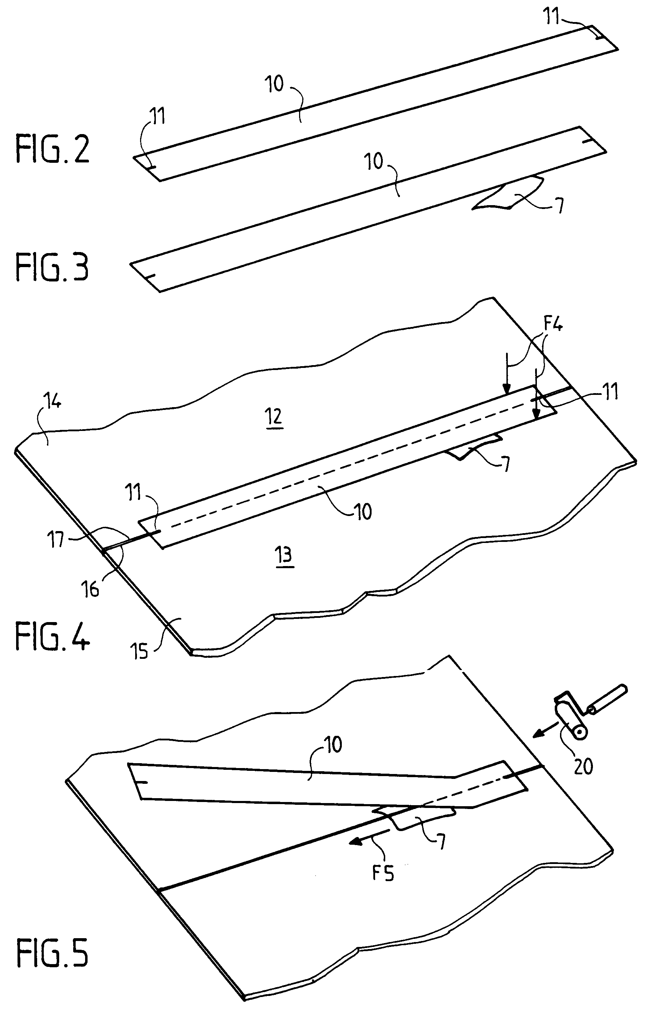

La figure 1 montre en perspective un dispositif 1 utilisable dans l'invention sous forme d'une bande enroulée en spirale sur elle-même à la manière d'un ruban adhésif. Cette bande présente une largeur de 75 mm et comprend une feuille d'aluminium 2 de 80 µm d'épaisseur, s'étendant sur toute sa largeur. En deux zones marginales adjacentes respectivement aux deux bords latéraux 4 de la bande 1, la feuille d'aluminium 2 est revêtue sur sa face tournée vers l'extérieur de l'enroulement d'un adhésif acrylique réticulé. Chacune des régions marginales 3 revêtue d'adhésif présente une largeur uniforme de 15 mm, et est donc limitée par une ligne 5 parallèle aux bords 4, indiquée en trait interrompu sur la figure 1, au voisinage de l'extrémité libre 6 de la bande. Une couche intercalaire antiadhérente 7, visible en partie sur les figures 3 à 5, de même largeur que la couche 2, recouvre les pistes adhésives 3, ainsi que la surface nue de la feuille 2 dans la région médiane 8 comprise entre les deux lignes 5. De façon connue notamment dans le domaine des rubans adhésifs, la feuille 7, qui peut notamment être en polyéthylène, en papier ou en papier couché au polyéthylène, évite le collage mutuel des spires de la bande enroulée, et permet de manipuler la bande déroulée pour sa mise en place sur les tôles à souder comme il sera décrit ci-après.

La première étape du procédé consiste à découper à l'aide de ciseaux 9, ou manuellement dans le cas d'un intercalaire en papier, un tronçon de la bande 1 préalablement déroulée sur une longueur convenable, comme montre a la figure 1. Pour mémoire, dans un procédé qui ne fait pas partie de l'invention, on étale ce tronçon sur une surface plane et on trace à ses deux extrémités des repères 11 à mi-largeur, par exemple à l'aide d'un crayon à bille (figure 2), puis on détache la feuille protectrice 7 sur une certaine longueur, par exemple de 100 mm environ, à partir d'une extrémité du tronçon 10, et on la replie sous la partie suivante du tronçon (figure 3). On applique alors le tronçon 10 sur les faces 12 et 13, situées sensiblement dans un même plan, de deux tôles d'acier inoxydable 14 et 15 placées bord à bord, le tronçon 10 venant chevaucher les bords adjacents 16 et 17 de ces deux tôles, et les repères 11 venant en coïncidence avec ces bords (figure 4). Sur la fraction du tronçon dont la feuille 7 a été retirée, les pistes adhésives viennent en contact avec les faces 12 et 13 des tôles, et il suffit d'une pression sur les régions marginales de la bande pour obtenir l'adhésion de celles-ci sur ces faces. Sur le reste de la longueur du tronçon, l'adhésif est séparé des tôles par la feuille 7. Comme indiqué par la flèche F5 à la figure 5, on tire ensuite la partie repliée de la feuille 7, le long des bords 16 et 17, à l'opposé de la région dénudée de la bande, de façon à dégager progressivement les pistes adhésives d'une extrémité à l'autre du tronçon 10. A mesure que ces pistes adhésives viennent en contact avec les faces des tôles, elles sont pressées contre celles-ci par un rouleau 20 en caoutchouc ou en matière plastique qu'on fait rouler sur la face supérieure du tronçon 10, d'un bout à l'autre de celui-ci, de façon à exercer une pression suffisante pour assurer un collage régulier sur toute la longueur de la bande.

On peut alors réaliser le soudage de façon classique, en projetant le gaz et en approchant l'électrode de soudage du côté des faces inférieures des tôles, comme vu aux figures 4 et 5, c'est-à-dire des faces opposées aux faces 12 et 13.

Lorsque le soudage est terminé, la bande 10 peut être arrachée avant ou après refroidissement.

De très bonnes soudures ont été obtenues par les procédés TIG et MIG pour des tôles d'acier inoxydable du type 304, d'une épaisseur de 2 mm, le dispositif selon l'invention étant appliqué comme il vient d'être décrit. On a utilisé un courant de soudage légèrement inférieur à 50 ampères, sans métal d'apport et en deux passes.

Les figures 6 et 7 sont relatives à la variante de l'invention dans laquelle on forme une gouttière à l'aide de la bande d'aluminium, avant sa mise en place sur les tôles. A la figure 6, le tronçon 10 découpé comme décrit plus haut est appliqué longitudinalement, par sa feuille protectrice, sur la génératrice d'un gabarit cylindrique de révolution 21 dont la demi-circonférence n'est pas supérieure à la largeur de la région médiane non encollée 8. On enroule la bande autour du gabarit 21 de façon à former une paroi semi-cylindrique 22, de part et d'autre de laquelle deux ailes 23, contenant chacune l'une des pistes adhésives, sont repliées radialement vers l'extérieur dans un même plan axial. On enlève alors la bande du gabarit 21, puis on commence de détacher la feuille protectrice et de mettre en place la bande comme décrit en relation avec les figures 3 à 5, en lui conservant toutefois le profil en gouttière formé à la figure 6. Le résultat est illustré à la figure 7, la paroi semi-cylindrique 22 restant éloignée des bords à souder 16 et 17 des tôles 14 et 15.

Des soudures d'excellente qualité ont été obtenues par les procédés TIG et MIG, pour des tôles identiques à celles de l'exemple précédent, en utilisant la bande selon l'invention selon la variante des figures 6 et 7.

La figure 8 montre comment la bande doit être appliquée dans le cas où les tôles à souder forment un dièdre non plat, par exemple à 90°. Le tronçon 10 de bande est alors collé sur les faces 12 et 13 des tôles 14 et 15 tournées vers l'intérieur du dièdre saillant, et sa région médiane 8, non revêtue d'adhésif, forme un arrondi dont la convexité est tournée vers l'arête du dièdre. La bande ne vient donc pas au voisinage immédiat de la zone de soudure où la température est la plus élevée.

## Revendications

1. Procédé de soudage électrique bord à bord, en présence d'un gaz, de deux tôles métalliques (14, 15) présentant chacune des première et seconde faces opposées, dans lequel on fait passer un courant électrique de soudage entre l'une au moins des tôles et une électrode placée en regard de la première face de celles-ci et qui se déplace progressivement le long des bords (16, 17) à souder, la zone de passage du courant électrique étant balayée par un courant de gaz, procédé dans lequel, avant de faire passer le courant électrique, on met en place sur les tôles une bande métallique flexible (2) dont deux régions marginales (3) sont revêtues d'un adhésif par contact résistant à la chaleur, lesdites régions marginales étant collées, au moyen dudit adhésif, sur les secondes faces (12, 13) des deux tôles respectivement de façon à s'étendre sensiblement parallèlement auxdits bords, caractérisé en ce que qu'on applique la bande de façon que sa région médiane (8), comprise entre les deux régions marginales (3), s'étende en regard desdites secondes faces en s'écartant de celles-ci pour délimiter avec les tôles une chambre tubulaire sensiblement fermée sur tout son périmètre, ladite région médiane étant ainsi balayée par le gaz.

2. Procédé selon la revendication 1, caractérisé en ce que la face de la bande métallique portant ledit adhésif est nue dans ladite région médiane (8).

3. Procédé selon l'une des revendications 1 et 2, caractérisé en ce que ledit adhésif est choisi parmi ceux du type acrylique réticulé et du type silicone.

4. Procédé selon l'une des revendications précédentes, caractérisé en ce que ladite bande métallique est a base d'aluminium.

5. Procédé selon l'une des revendications précédentes, caractérisé en ce que ladite bande métallique a une épaisseur comprise entre 0,03 et 0,15 mm.

6. Procédé selon l'une des revendications précédentes, caractérisé en ce que ladite bande métallique a une largeur comprise entre 30 et 200 mm.

7. Procédé selon l'une des revendications précédentes, caractérisé en ce que chacune desdites régions marginales a une largeur comprise entre 5 et 50 mm.

8. Procédé selon l'une des revendications 1 à 7, caractérisé en ce que les secondes faces des deux tôles sont sensiblement dans un même plan et qu'on applique la bande de façon que sa région médiane (8) forme une gouttière (22) définissant

9. Procédé selon l'une des revendications 1 à 7, caractérisé en ce que les secondes faces (12, 13) des deux tôles sont tournées vers l'intérieur d'un dièdre saillant formé par les tôles, et qu'on applique la bande de façon que sa région médiane (8) s'écarte desdites secondes faces au moins au voisinage desdits bords (16, 17).

10. Procédé selon l'une des revendications précédentes, caractérisé en ce que lesdites tôles sont en acier inoxydable.

## Claims

1. Process for electric welding edge to edge, in the presence of a gas, of two metallic plates or sheets (14, 15) each having a first and a second opposed face, in which an electric welding current is caused to pass between at least one of the sheets and an electrode placed facing the first face of it, and which is displaced progressively along the length of the edges (16, 17) to be welded, the zone through which the electric current passes being subjected to a flow of gas, in which process, before the electric current is passed, there is put in place on the sheets a flexible metallic strip (2) of which two marginal regions (3) are coated with a contact adhesive which is resistant to heat, the said marginal regions being stuck by means of the said adhesive to the second faces (12, 13) of the two sheets respectively in such a way as to extend substantially parallel to the said edges, characterised in that the strip is applied in such a way that in its middle region (8), present between the two marginal regions (3), it extends opposite the said second faces spaced from them to define with the sheets a tubular chamber which is substantially closed over the whole of its perimeter, the said middle region thus being subjected to the gas.

2. Process according to claim 1, characterised in that the face of the metallic strip which carries the said adhesive is bare in the said middle region (8).

3. Process according to one of claims 1 and 2, characterised in that the said adhesive is chosen from among those of the reticulated acrylic type and of the silicone type.

4. Process according to one of the foregoing claims, characterised in that the said metallic strip is aluminium-based.

5. Process according to one of the foregoing claims, characterised in that the said metallic strip has a thickness of between 0.03 and 0.15 mm.

6. Process according to one of the foregoing claims, characterised in that the said metallic strip has a width between 30 and 200 mm.

7. Process according to one of the foregoing claims, characterised in that each of the said marginal regions has a width between 5 and 50 mm.

8. Process according to one of claims 1 to 7, characterised in that the second faces of the two sheets are substantially in the same plane and that the strip is applied in such a way that its middle region (8) forms a gutter or channel (22) defining the said tubular chamber.

9. Process according to one of claims 1 to 7, characterised in that the second faces (12, 13) of the two sheets face towards the inside of a salient dihedral angle formed by the sheets, and that the strip is applied in such a way that its middle region (8) is spaced away from the said second faces at least in the neighbourhood of the said edges (16, 17).

10. Process according to one of the foregoing claims, characterised in that the said sheets are of stainless steel.

## Patentansprüche

1. Verfahren zum Elektro-Stumpfnahtschweißen, in Gegenwart eines Gases, von zwei Metallblechen (14, 15), von denen jedes eine erste und eine zweite einander entgegengesetzte Seite aufweisen, bei dem man einen elektrischen Schweißstrom zwischen mindestens einem der Bleche und einer Elektrode fließen läßt, die gegenüber von deren erster Seite vorgesehen ist und die sich nach und nach entlang der zu verschweißenden Ränder (16, 17) verschiebt, wobei die Fließzone des elektrischen Stroms durch einen Gasstrom gespült wird, bei welchem Verfahren man, bevor man den elektrischen Strom fließen läßt, auf den Blechen ein flexibles Metallband (2) anbringt, dessen zwei Randbereiche (3) mit einem hitzebeständigen Kontaktkleber beschichtet sind, wobei die besagten Randbereiche mittels des besagten Klebers auf die zweiten Seiten (12, 13) der beiden jeweiligen Bleche geklebt werden, so daß sie sich im wesentlichen parallel zu den besagten Rändern erstrecken, dadurch gekennzeichnet, daß man das Band so anbringt, daß sich sein mittlerer Bereich (8), der zwischen den beiden Randbereichen (3) liegt, gegenüber von den besagten zweiten Seiten erstreckt, wobei er sich von diesen entfernt, um mit den Blechen eine röhrenförmige Kammer zu bilden, die auf ihrem gesamten Umfang im wesentlichen geschlossen ist, wobei der besagte mittlere Bereich so durch das Gas gespült wird.

2. Verfahren nach Anspruch 1, dadurch gekennzeichnet, daß die den besagten Kleber tragende Seite des Metallbandes in dem besagten mittleren Bereich (8) unbeschichtet ist.

3. Verfahren nach einem der Ansprüche 1 und 2, dadurch gekennzeichnet, daß der besagte Kleber unter denjenigen vom vernetzten Acryl-Typ und vom Silikon-Typ ausgewählt wird.

4. Verfahren nach einem der vorangehenden Ansprüche, dadurch gekennzeichnet, daß das besagte Metallband aus Aluminium als Grundbestandteil ist.

5. Verfahren nach einem der vorangehenden Ansprüche, dadurch gekennzeichnet, daß das besagte Metallband eine Dicke aufweist, die zwischen 0,03 und 0,15 mm liegt.

6. Verfahren nach einem der vorangehenden Ansprüche, dadurch gekennzeichnet, daß das besagte Metallband eine Breite aufweist, die zwischen 30 und 200 mm liegt.

7. Verfahren nach einem der vorangehenden Ansprüche, dadurch gekennzeichnet, daß jeder der besagten Randbereiche eine Breite aufweist, die zwischen 5 und 50 mm liegt.

8. Verfahren nach einem der Ansprüche 1 bis 7, dadurch gekennzeichnet, daß sich die zweiten Seiten der beiden Bleche im wesentlichen in einer selben Ebene befinden, und daß man das Band so anbringt, daß sein mittlerer Bereich (8) eine die besagte röhrenförmige Kammer begrenzende Rinne (22) bildet.

9. Verfahren nach einem der Ansprüche 1 bis 7, dadurch gekennzeichnet, daß die zweiten Seiten (12, 13) der beiden Bleche dem Inneren eines von den Blechen gebildeten vorspringenden V-Winkels zugewandt sind, und daß man das Band so anbringt, daß sich sein mittlerer Bereich (8) zumindest in der Nähe der besagten Ränder (16, 17) von den besagten zweiten Seiten entfernt.

10. Verfahren nach einem der vorangehenden Ansprüche, dadurch gekennzeichnet, daß die besagten Bleche aus nichtrostendem Stahl sind.
